**Europäisches Patentamt**

**European Patent Office**

**Office européen des brevets**

(11) Numéro de publication : **0 451 060 B1**

(12) **FASCICULE DE BREVET EUROPEEN**

(45) Date de publication du fascicule du brevet :
**17.11.94 Bulletin 94/46**

(51) Int. Cl.$^5$ : **G06F 1/26,** G06F 1/32,
G06F 3/00

(21) Numéro de dépôt : **91400931.1**

(22) Date de dépôt : **05.04.91**

(54) **Circuit de réveil d'alimentation de microprocesseur, notamment pour une carte d'identification d'un ensemble de télécommande d'automobile.**

(30) Priorité : **06.04.90 FR 9004427**

(43) Date de publication de la demande :
**09.10.91 Bulletin 91/41**

(45) Mention de la délivrance du brevet :
**17.11.94 Bulletin 94/46**

(84) Etats contractants désignés :
**DE ES GB IT**

(56) Documents cités :
**EP-A- 0 343 619
US-A- 3 150 271**

(73) Titulaire : **VALEO SECURITE HABITACLE
12bis, rue Maurice Berteaux
F-78290 Croissy-Sur-Seine (FR)**

(72) Inventeur : **Rydel, Charles
70 rue d'Aubervilliers
F-75019 Paris (FR)**

(74) Mandataire : **Martin, Jean-Jacques et al
Cabinet REGIMBEAU
26, Avenue Kléber
F-75116 Paris (FR)**

Jouve, 18, rue Saint-Denis, 75001 PARIS

EP 0 451 060 B1

## Description

La présente invention concerne un circuit de réveil d'alimentation pour un microprocesseur, en particulier destiné à des ensembles de télécommande interactive d'automobile.

Dans ces ensembles, qui sont destinés à assurer la reconnaissance à distance du conducteur lorsque celui-ci s'approche de son véhicule, un module de bord intégré à l'automobile envoie un signal d'interrogation à une "étiquette électronique", généralement réalisée sous forme d'un badge ou d'une carte plate portée par le conducteur sur lui ou dans l'une de ses poches. La carte reçoit le signal d'interrogation, analyse celui-ci au moyen d'un microprocesseur incorporé à la carte et élabore un signal d'identification codé propre à la carte, qui sera émis en retour par cette dernière en direction du module de bord qui effectuera alors un certain nombre d'actions, par exemple en déverrouillant les portières, en ajustant automatiquement la position des rétroviseurs, du volant, etc.

L'une des principales difficultés rencontrées avec un tel type de télécommande tient au fait que la carte portée par le conducteur doit être de faibles dimensions (typiquement, celles d'une carte de crédit) mais qu'elle doit néanmoins présenter une autonomie importante (de l'ordre d'un an), de sorte que la consommation des circuits qu'elle contient est un paramètre déterminant de sa conception.

Par ailleurs, l'identification devant pouvoir s'effectuer "à la volée", c'est-à-dire sans contact entre le module de bord et la carte, et sans même que le conducteur ait à sortir la carte de sa poche et à appuyer sur un bouton de celle-ci, il est nécessaire que la carte soit à tout moment en mesure de recevoir et analyser un signal d'interrogation incident, sans aucune action préalable extérieure du conducteur (par exemple, appui sur un bouton de la carte).

Par ailleurs, compte tenu de sa consommation propre importante, il n'est pas envisageable de laisser en permanence le microprocesseur dans son état actif normal ; on utilise alors la possibilité de déconnecter celui-ci en le faisant passer d'un état de veille, correspondant à cet état actif, à un état de sommeil, dans lequel sa consommation propre est nulle ou infime, et inversement. Le passage de l'état de sommeil à l'état de veille se fera par application d'un signal de réveil sur une entrée du microprocesseur spécialement conçue à cet effet ou même, simplement, sur la borne d'alimentation du microprocesseur (le signal de réveil étant alors la tension continue d'alimentation).

On voit ainsi qu'il suffit de maintenir alimenté en permanence uniquement le circuit récepteur (qui transforme le signal radiofréquence reçu en un signal basse fréquence démodulé et amplifié) et un circuit d'interfaçage, disposé entre ce récepteur et le microprocesseur, qui permettra de vérifier si le signal démodulé répond à un certain nombre de critères et, dans l'affirmative, appliquera un signal de réveil au microprocesseur pour le faire passer à son état actif.

L'objet de la présente invention est précisément un tel circuit (désigné par la suite "circuit de réveil d'alimentation"), assurant l'interfaçage entre, d'une part, le circuit récepteur des signaux de télécommande émis par le module de bord et, d'autre part, le microprocesseur de la carte d'identification.

On notera cependant que l'application aux ensembles de télécommande d'automobile n'est pas limitative, et que d'autres applications comparables peuvent être envisagées sans sortir du cadre de la présente invention.

De la même façon, le circuit de réveil d'alimentation de l'invention est parfaitement susceptible de traiter d'autres signaux que ceux produits par un récepteur de signaux radio-fréquence, et la présente invention s'applique donc également au réveil de l'alimentation d'un microprocesseur à partir de signaux d'entrée remplissant des conditions comparables mais produits par d'autres circuits qu'un récepteur de signaux radio.

Par ailleurs, le terme "microprocesseur" ne devra pas être considéré dans son sens technologique étroit, mais dans son sens large englobant tous les circuits permettant d'effectuer des traitements numériques, incluant ainsi aussi bien des circuits présentant un degré d'intégration élevé (tels les microcontrôleurs) que ceux présentant un degré d'intégration moindre (circuits nécessitant l'association de composants discrets). En tout état de cause, la fonction réalisée par le circuit de l'invention est entièrement indépendante de la technologie et de la structure des circuits auxquels il est relié, en amont aussi bien qu'en aval.

La présente invention a donc pour objet un circuit de réveil d'alimentation permettant d'assurer une fonction de discrimination d'un signal d'interrogation effectif, produit par le module de bord d'un véhicule, d'avec d'autres signaux susceptibles d'être captés par le récepteur radiofréquence - tout particulièrement, les parasites industriels à 100 Hz qui pourraient, en l'absence de précautions particulières, être interprétés dans certaines conditions de réception de la même manière que des trains d'impulsions de commande d'un signal d'interrogation.

Plus précisément, pour permettre cette discrimination, on prévoit que le message du signal d'interrogation (qui est un message numérique par impulsions codées) débute par un en-tête formé d'une succession d'impulsions semblables (que l'on appellera par la suite "impulsions de commande"), ces impulsions étant en nombre prédéterminé et présentant une fréquence de récurrence prédéterminée.

Cet en-tête de message est destiné, après discrimination, à provoquer le réveil du microprocesseur afin que celui-ci puisse, après être passé à un état actif, traiter les impulsions qui vont suivre du message codé proprement dit contenu dans le signal d'interrogation.

En premier lieu, pour discriminer les parasites sporadiques, on prévoit une première condition imposant que le train d'impulsions de commande soit constitué d'un nombre minimal d'impulsions successives, par exemple au moins seize impulsions de commande.

En second lieu, notamment pour éviter un réveil intempestif du microprocesseur par des parasites industriels à 100 Hz, on prévoit une seconde condition imposant que la fréquence de récurrence des impulsions de commande ne soit pas inférieure à une fréquence limite prédéterminée, nettement supérieure à 100 Hz ; on pourra ainsi prévoir une fréquence de récurrence typique de 1 kHz, correspondant à une période T de récurrence des impulsions de commande de 1 ms.

En revanche, il sera souhaitable de ne pas imposer de conditions sur la durée propre de chaque impulsion (c'est-à-dire sur le rapport cyclique du train d'impulsions de commande), car ce paramètre est susceptible de présenter une dispersion relativement importante d'un module de bord à l'autre, des dérives étant également possible en fonction des variations de températures et du vieillissement des composants.

C'est pourquoi on ne retiendra que les deux conditions cumulatives mentionnées ci-dessus, à savoir un nombre minimal d'impulsions de commande et une fréquence de récurrence minimale pour ces impulsions de commande.

Par ailleurs, compte tenu des contraintes de consommation indiquées plus haut et du fait que le circuit de réveil devra pouvoir être opérationnel à tout moment, sa consommation propre devra être la plus réduite possible, afin de ne pas avoir d'incidence sur la durée de vie de la pile alimentant la carte d'identification.

On connaît déjà par EP-A-0 343 619 un dispositif de réveil d'un microprocesseur situé à bord d'un véhicule lors de la réception de signaux provenant d'un badge ou analogue, capable seulement d'émettre. Ce dispositif, dont les contraintes en matière d'alimentation électrique sont mineures du fait de la présence de la batterie du véhicule, est par ailleurs complexe et inadapté à une intégration dans un badge autonome de petites dimensions.

On connaît en outre par US-A-3 150 271 un circuit de "pompage" à transistors. Ce document ne mentionne ou ne suggère cependant aucunement l'utilisation d'un tel circuit en coopération avec des moyens à seuil et avec un circuit de réception radio, ni en corollaire l'application au réveil d'un microprocesseur dans un badge autonome.

La présente invention propose un circuit de réveil d'alimentation de microprocesseur répondant à l'ensemble des exigences citées plus haut.

Ce circuit est un circuit du type précité, c'est-à-dire un circuit de réveil d'alimentation pour faire passer un microprocesseur d'un état non alimenté à un état alimenté par application d'un signal de réveil sur l'une de ses entrées, notamment pour une carte d'identification d'un ensemble de télécommande d'automobile.

Selon l'invention, ce circuit comprend :
- des moyens convertisseurs, recevant en entrée un train d'impulsions de commande et accroissant d'un incrément donné, à chaque détection d'une nouvelle impulsion reçue, le niveau d'un signal de commande, le niveau de ce signal de commande décroissant ensuite progressivement jusqu'à détection de l'impulsion suivante, et
- des moyens à seuil, propres à produire ledit signal de réveil lorsque le niveau dudit signal de commande a atteint une valeur de seuil prédéterminée, de manière à ne produire ledit signal de réveil que lorsque le nombre d'impulsions de commande appliquées en entrée a atteint une valeur minimale prédéterminée et que si la fréquence de récurrence de ces impulsions n'est pas inférieure à une fréquence limite prédéterminée.

Ledit signal de commande peut en particulier être une tension. Avantageusement, il est indépendant de la durée et du niveau de l'impulsion de commande correspondante, et ledit incrément donné est un incrément constant.

Dans un mode de réalisation, lesdits moyens convertisseurs comprennent : un condensateur, aux bornes duquel est prise la tension constituant le signal de commande ; un transistor, fonctionnant en commutation entre un état bloqué et un état saturé de manière à contrôler la charge de ce condensateur ; des moyens de commande de ce transistor, comprenant un ensemble à diode-capacité propre à détecter une transition d'une impulsion appliquée en entrée et à faire alors passer le transistor de l'état bloqué à l'état saturé pendant une durée prédéterminée de manière à accroître, pendant cette durée, d'un incrément de charge donné la charge cumulée dans le condensateur ; et une résistance de décharge, montée aux bornes du condensateur de manière à provoquer la décroissance de la charge cumulée dans celui-ci après la fin de ladite durée prédéterminée et jusqu'à l'apparition de l'impulsion suivante.

Le circuit peut en outre comprendre des moyens de forçage du réveil, propres à appliquer directement aux bornes du condensateur et de sa résistance de décharge une tension supérieure à la valeur de seuil prédéterminée des moyens à seuil.

Le train d'impulsions peut notamment être le signal démodulé produit en sortie d'un récepteur de signaux de télécommande radiofréquence.

On va maintenant décrire un exemple de réalisation de l'invention, en référence aux dessins annexés.

La figure 1 est un schéma du circuit de l'invention.

La figure 2 montre l'évolution au cours du temps du signal de commande Vc produit par ce circuit à réception d'un train d'impulsions de commande Vbf.

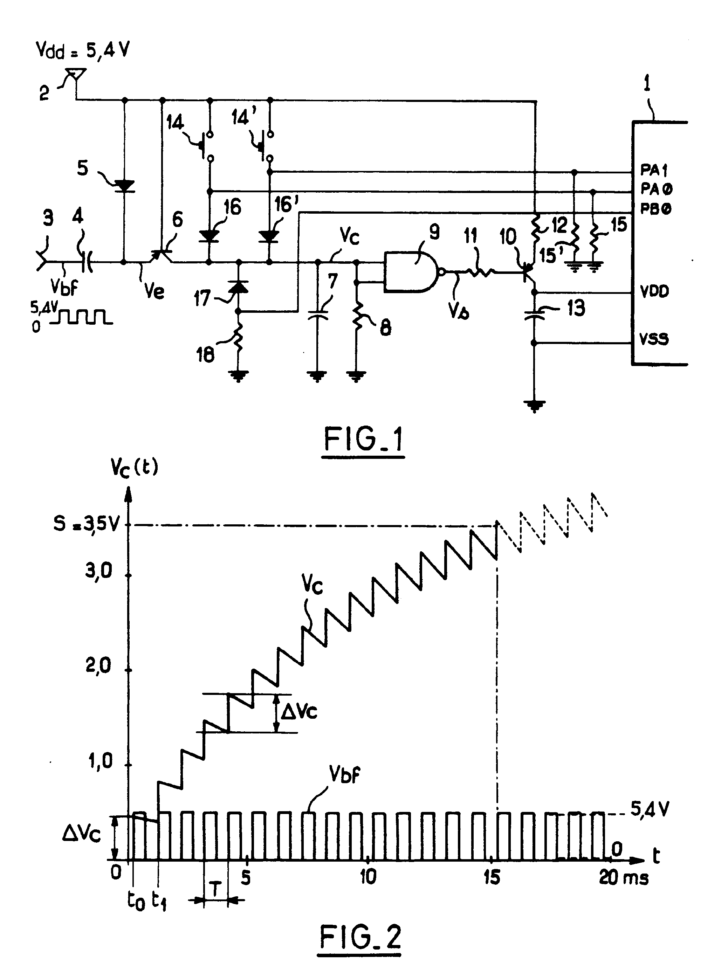

Sur la figure 1, la référence 1 désigne le microprocesseur, qui peut prendre deux états de fonctionnement, à savoir un état de sommeil et un état de veille, le passage de l'état de sommeil à l'état de veille s'effectuant par application d'une tension positive d'alimentation Vdd (par exemple Vdd = 5,4 V), produite par la source 2, sur l'entrée homologue du microprocesseur, désignée VDD, la borne VSS étant par ailleurs reliée en permanence au potentiel de la masse.

Dans le cas du microprocesseur considéré ici, qui est par exemple un microcontrôleur *68HC05*, le réveil s'obtient simplement par application de la tension d'alimentation à la borne d'alimentation du microprocesseur et par maintien de cette tension sur cette borne. Le circuit de l'invention pourrait cependant être adapté à d'autres types de microprocesseurs ou circuits numériques dans lesquels le réveil serait obtenu par application d'une impulsion à une entrée spécifique, indépendante de la borne d'alimentation.

Les impulsions de commande sont appliquées à une entrée 3 du circuit de l'invention ; dans l'exemple décrit ici, elles sont constituées d'un signal démodulé rectangulaire 0/5,4 V de période T désigné Vbf et représenté en bas de la figure 2 (l'échelle des ordonnées étant, pour ce signal Vbf, une échelle arbitraire afin de ne pas obscurcir le dessin).

Le train d'impulsions de commande est appliqué à un premier circuit, formant convertisseur fréquence/tension, constitué des éléments référencés 4 à 8.

Tout d'abord, le train d'impulsions de commande est appliqué à une première armature d'un condensateur 4, dont la seconde armature est reliée à la cathode d'une diode 5 dont l'anode est reliée à la source de potentiel constant 2. Le point milieu du condensateur 4 et de la diode 5 est relié à l'émetteur d'un transistor 6 monté en base commune, c'est-à-dire avec sa base reliée à la source 2, un signal de commande Vc évoluant au cours du temps de la manière illustrée figure 2 étant recueilli sur le collecteur de ce transistor. Enfin, ce circuit convertisseur comporte un réseau parallèle capacité/résistance 7, 8 disposé entre le collecteur du transistor 6 et la masse.

Le signal Vc, qui est le signal de sortie du convertisseur fréquence/tension, attaque ensuite un circuit à seuil 9, par exemple une porte NON-ET dont les deux entrées sont reliées ensemble, produisant ainsi, en cas de dépassement du seuil, un signal de sortie Vs appliqué à la base d'un second transistor 10, monté en collecteur commun, par l'intermédiaire d'une résistance série 11. Le transistor 10 a son émetteur relié à la source d'alimentation 2 par l'intermédiaire d'une résistance série 12 de faible valeur, et son collecteur relié à la borne d'alimentation VDD du microprocesseur 1. Un découplage est prévu par l'intermédiaire du condensateur 13, disposé entre le collecteur du transistor 10 et la masse.

Les éléments que l'on vient de présenter constituent la structure de base d'une forme de réalisation du circuit de l'invention.

On va maintenant en décrire le fonctionnement.

Les valeurs numériques que l'on donnera à titre d'exemple dans cette description sont celles qui ont été relevées avec les valeurs de composants suivantes (qui n'ont bien entendu aucun caractère limitatif) :

| | | | | |
|---|---|---|---|---|
| Résistance 8 | = | 1 MΩ | Résistance 11 | = 22 kΩ |
| Résistance 12 | = | 10 Ω | Résistance 18 | = 100 kΩ |
| Résistance 15,15' | = | 100 kΩ | Condensateur 4 | = 1 nF |
| Condensateur 7 | = | 10 nF | Condensateur 13 | = 10 nF |
| Transistors 1,2 | = | BC858 | Porte NI 9 | = 4093 |
| Diodes 5,16,16',17 | = | 1N4148 | | |

et dans les conditions opératoires suivantes :

Vdd = 5, 4 V, et

Vbf = impulsions 0/5,4 V, fréquence de récurrence 1 kHz, soit une période T = 1 ms.

Juste avant le front montant de la première impulsion, c'est-à-dire juste avant l'instant to de la première transition, la tension Vbf est nulle, le transistor 6 est bloqué, sa tension d'émetteur Ve est égale à la tension aux bornes du condensateur 4, c'est-à-dire égale à Vdd. Le transistor étant bloqué, la tension de collecteur (tension de commande Vc) est nulle.

Juste après la première transition survenant à l'instant to, on a Vbf = Vdd = 5,4 V de sorte que, par l'effet bien connu de doubleur de tension, la tension d'émetteur Ve passe à 2.Vdd, la diode 5 se bloquant et le transistor 6 se saturant.

Le condensateur 8 se charge alors à travers le transistor 6 tant que ce dernier reste saturé, c'est-à-dire tant que l'on aura Ve > Vdd, c'est-à-dire jusqu'à ce que la tension aux bornes du condensateur 4 s'annule. Pendant ce laps de temps très bref partant de $t_O$ , le condensateur 7 va se charger d'un incrément de charge produisant à ses bornes un incrément de tension $\Delta$Vc. Avec les valeurs de composants et les conditions opérationnelles indiquées plus haut, $\Delta$Vc est de l'ordre de 0,47 V et le laps de temps précité est de l'ordre de 7,3 ns.

Après cette courte période de charge, et jusqu'à apparition de l'impulsion suivante (prochain front montant à $t_1$), le transistor 6 reste bloqué, de sorte que le condensateur 7, maintenant isolé, va se décharger dans la résistance 8.

Ainsi, après avoir augmenté de l'incrément de tension $\Delta$Vc, la tension de commande Vc va maintenant diminuer selon une loi exponentielle (la constante de temps étant celle du circuit RC constituée des éléments 8 et 7). Avec les valeurs indiquées, la tension de commande Vc retombe de 0,47 V à 0,42 V au bout de 1 ms.

A l'apparition de l'impulsion suivante, c'est-à-dire à $t_1 = t_O$ + 1 ms, le cycle précédent recommence, la tension aux bornes du condensateur 7 augmentant à nouveau d'un incrément de tension $\Delta$Vc (de même valeur qu'au cours du cycle précédent). Mais le condensateur 7 ne s'étant pas complètement déchargé, la charge nouvelle viendra se cumuler à la précédente, et de même pour les tensions, de sorte que la tension atteinte après la seconde impulsion sera égale à Vc = 0,42 + 0,47 = 0,89 V. En revanche, la décharge du condensateur 7 dans la phase du cycle qui suivra sera plus importante, du fait de la loi exponentielle, de sorte que, à t0 + 2 ms, la tension Vc sera retombée à Vc = 0,8 V.

On voit ainsi qu'à chaque impulsion le condensateur 7 subit un cycle de charge suivi d'un cycle de décharge. Si la fréquence de récurrence des impulsions est suffisante, (comme c'est le cas dans l'exemple donné ci-dessus), la décharge sera toujours moins importante que la charge, de sorte que les valeurs crête successives de la tension de commande Vc obtenue après chacune des impulsions augmentera au fur et à mesure de la succession de ces impulsions, comme on peut le voir très clairement sur la figure 2.

Au bout d'un certain nombre d'impulsions (après la seizième impulsion, dans l'exemple donné plus haut), la tension de commande Vc va dépasser le seuil de basculement de la porte NON-ET, ce qui va produire en sortie de celle-ci le passage d'un niveau haut au niveau bas de sa sortie Vs et donc le changement d'état du transistor 10 qui, de bloqué, va devenir saturé, entraînant la mise en alimentation du microprocesseur 1 par application de la tension produite la source 2 sur l'entrée d'alimentation VDD.

Le transistor 10 peut également alimenter, de la même façon, divers étages auxiliaires de la carte.

La résistance série d'émetteur 12, de faible valeur, permet de limiter le pic de courant lors de la commutation du transistor 10. La résistance 11 est calculée de manière à appliquer au transistor 10 un courant de base suffisant pour assurer une bonne saturation de celui-ci.

On notera incidemment que, avant d'effectuer un traitement numérique par le microprocesseur, il faudra attendre la stabilisation de l'oscillateur local de celui-ci pour qu'il entre effectivement en fonctionnement et verrouille sa tension d'alimentation. Ce temps de stabilisation étant de l'ordre de quelques millisecondes, on pourra choisir un "temps de réveil" de l'ordre de 30 ms ; le message émis par le module de bord du véhicule devra donc prévoir un temps de latence, égal à ce temps de réveil, entre la fin des impulsions de commande et le début des informations d'identification proprement dites à traiter par le microprocesseur.

On va maintenant décrire un certain nombre de circuits annexes, subsidiaires, faisant partie du circuit de l'invention.

Outre le réveil automatique du microprocesseur par détection d'un train d'impulsions spécifiques en sortie du récepteur de signaux radiofréquence, on peut prévoir également un réveil forcé, provoqué par l'appui sur un bouton-poussoir 14 ou 14′ servant à commander une fonction particulière (par exemple, l'allumage des phares à distance).

L'appui sur l'un de ces boutons-poussoirs provoque la mise à l'état haut d'une entrée respective PAØ ou PA1 du microprocesseur, les résistances 15, 15′ imposent un niveau logique bas sur ces entrées lorsqu'aucun des boutons-poussoirs 14, 14′ n'est enfoncé. Pour réveiller le microprocesseur lors de l'appui sur l'un de ces boutons poussoirs, on prévoit simplement, en série avec chacun de ceux-ci, une diode 16, 16′ qui appliquera la tension Vdd sur les entrées de la porte NON-ET 9, permettant le basculement de cette porte tout en évitant de perturber le fonctionnement du convertisseur fréquence/tension lorsque celui-ci est opérationnel en l'absence d'appui sur les boutons-poussoirs 14, 14'.

Enfin, on prévoit de verrouiller l'alimentation une fois le microprocesseur réveillé.

A cet effet, on utilise une sortie du microprocesseur, référencée PBØ, qui passe à l'état haut dès la mise en route du microprogramme interne. Ce signal haut est appliqué aux entrées de la porte NON-ET 9 par l'intermédiaire de la diode 17, provoquant ainsi un auto-verrouillage de l'alimentation du microprocesseur. La résistance 18 impose un niveau bas sur cette liaison lorsque le microprocesseur n'est pas alimenté.

Lorsque le traitement numérique est terminé, le microprocesseur s'auto-déconnecte du fait du passage au niveau bas de cette sortie PBØ. Le condensateur 7, qui n'est alors plus relié à aucune source de tension, va se décharger rapidement au travers de la résistance 8. Ainsi, si le seuil bas de la porte 9 est de 1,5 V, la déconnexion sera obtenue au bout de 12 ms environ.


## Revendications

**1.** Un circuit de réveil d'alimentation, pour faire passer un microprocesseur (1) d'un état non alimenté à un état alimenté par application d'un signal de réveil sur l'une de ses entrées (VDD), notamment pour une carte d'identification d'un ensemble de télécommande d'automobile, caractérisé en ce qu'il comprend :
- des moyens convertisseurs, recevant en entrée un train d'impulsions de commande (Vbf) et accroissant d'un incrément donné (ΔVc), à chaque détection d'une nouvelle impulsion reçue, le niveau d'un signal de commande (Vc), le niveau de ce signal de commande décroissant ensuite progressivement jusqu'à détection de l'impulsion suivante, et
- des moyens à seuil (9), propres à produire ledit signal de réveil lorsque le niveau dudit signal de commande a atteint une valeur de seuil (S) prédéterminée, de manière à ne produire ledit signal de réveil que lorsque le nombre d'impulsions de commande appliquées en entrée a atteint une valeur minimale prédéterminée et que si la fréquence de récurrence de ces impulsions n'est pas inférieure à une fréquence limite prédéterminée.

**2.** Le circuit de la revendication 1, dans lequel ledit signal de commande est une tension (Vc).

**3.** Le circuit de la revendication 1, dans lequel ledit incrément donné (ΔVc) est indépendant de la durée de l'impulsion de commande correspondante.

**4.** Le circuit de la revendication 1, dans lequel ledit incrément donné (ΔVc) est indépendant du niveau de l'impulsion de commande correspondante.

**5.** Le circuit de la revendication 1, dans lequel ledit incrément donné (ΔVc) est un incrément constant.

**6.** Le circuit de la revendication 2, dans lequel lesdits moyens convertisseurs comprennent :
- un condensateur (7), aux bornes duquel est prise la tension (Vc) constituant le signal de commande,
- un transistor (6), fonctionnant en commutation entre un état bloqué et un état saturé de manière à contrôler la charge de ce condensateur,
- des moyens de commande de ce transistor, comprenant un ensemble à diode-capacité (5, 4) propre à détecter une transition d'une impulsion appliquée en entrée et à faire alors passer le transistor de l'état bloqué à l'état saturé pendant une durée prédéterminée de manière à accroître, pendant cette durée, d'un incrément de charge donné la charge cumulée dans le condensateur, et
- une résistance de décharge (8), montée aux bornes du condensateur de manière à provoquer la décroissance de la charge cumulée dans celui-ci après la fin de ladite durée prédéterminée et jusqu'à l'apparition de l'impulsion suivante.

**7.** Le circuit de la revendication 4, comprenant en outre des moyens (14, 16 ; 14', 16') de forçage du réveil, propres à appliquer directement aux bornes du condensateur et de sa résistance de décharge une tension supérieure à la valeur de seuil prédéterminée des moyens à seuil.

**8.** Le circuit de la revendication 1, dans lequel le train d'impulsions (Vbf) est le signal démodulé produit en sortie d'un récepteur de signaux de télécommande radiofréquence.

EP 0 451 060 B1

## Patentansprüche

1. Netzteil-Aufweck-Schaltung, um einen Mikroprozessor (1) von einem Ausschaltzustand in einen Einschaltzustand zu schalten, was über das Anlegen eines Aufwecksignals an einem seiner Eingänge (VDD) erfolgt, insbesondere für eine ferngesteuerte Identifizierung bei Kraftwagen, **dadurch gekennzeichnet,** daß sie die folgenden Bestandteile umfaßt:
   - Wandlermittel, die eingangsseitig eine Steuerimpulsfolge (Vbf) empfangen und die bei jeder Erfassung eines neuen empfangenen Impulses den Pegel eines Steuersignals (Vc) um ein gegebenes Inkrement (Δ Vc) erhöhen, wobei der Pegel dieses Steuersignals anschließend schrittweise bis zur Erfassung des folgenden Impulses abnimmt, und
   - Schwellwertmittel (9), die das besagte Aufwecksignal erzeugen, wenn der Pegel des genannten Steuersignals einen vorgegebenen Schwellenwert (S) erreicht hat, so daß dieses Aufwecksignal nur dann erzeugt wird, wenn die Anzahl der eingangsseitig angelegten Steuerimpulse einen vorgegebenen Mindestwert erreicht hat und die Impulsfolgefrequenz dieser Impulse eine vorgegebene Grenzfrequenz nicht unterschreitet.

2. Schaltung nach Anspruch 1, bei der das besagte Steuersignal eine Spannung (Vc) ist.

3. Schaltung nach Anspruch 1, bei der das gegebene Inkrement (Δ Vc) unabhängig von der Dauer des entsprechenden Steuerimpulses ist.

4. Schaltung nach Anspruch 1, bei der das gegebene Inkremnt (Δ Vc) unabhängig vom Pegel des entsprechenden Steuerimpulses ist.

5. Schaltung nach Anspruch 1, bei der das gegebene Inkrement (Δ Vc) ein konstantes Inkrement ist.

6. Schaltung nach Anspruch 2, bei der die genannten Wandlermittel die folgenden Bestandteile umfassen:
   - einen Kondensator (7), an dessen Anschlüssen die Spannung (Vc), die das Steuersignal bildet, aufgenommen wird,
   - einen Transistor (6), der im Umschaltbetrieb zwischen einem gesperrten Zustand und einem gesättigten Zustand arbeitet, um die Ladung dieses Kondensators zu kontrollieren,
   - Mittel zur Steuerung dieses Transistors mit einem Diode-Kapazität-Glied (5, 4), um den Übergang eines eingangsseitig angelegten Impulses zu erfassen und daraufhin den Transistor von dem gesperrten Zustand in den gesättigten Zustand während einer vorgegebenen Dauer umzuschalten, so daß während dieser Dauer die kumulierte Ladung im Kondensator um ein gegebenes Ladungsinkrement erhöht wird, und
   - einen Entladewiderstand (8), der an den Anschlüssen des Kondensators eingebaut ist, um den Abbau der in diesem kumulierten Ladung nach dem Ende der vorgegebenen Dauer und bis zum Auftreten des nächsten Impulses zu bewirken.

7. Schaltung nach Anspruch 4, die außerdem Mittel (14, 16; 14', 16') zur direkten Aufweck-Aktivierung enthält, um an den Anschlüssen des Kondensators und seines Entladewiderstands unmittelbar eine Spannung anzulegen, die größer als der vorgegebene Schwellenwert der Schwellwertmittel ist.

8. Schaltung nach Anspruch 1, bei der die Impulsfolge (Vbf) ein demoduliertes Signal ist, das am Ausgang eines Empfängers für Hochfrequenz-Fernsteuersignale erzeugt wird.

## Claims

1. A power supply wake-up circuit for switching a microprocessor (1) from a non-powered state to a powered state by applying a wake-up signal to one of the inputs (VDD) of the microprocessor, in particular for use in an ID card of a car remote control system, the circuit being characterized in that it comprises:
   converter means receiving an input train of control pulses (Vbf) and increasing the level of a control signal (Vc) by a given increment (ΔVc) each time it detects a new received pulse, the level of said control signal then decreasing progressively until the following pulse is detected; and
   threshold means (9) suitable for producing said wake-up signal when the level of said control signal has reached a predetermined threshold value (S) in such a manner as to produce said wake-up signal only when the number of control pulses applied to the input has reached a predetermined minimum num-

7

ber and providing the recurrence frequency of the pulses is not less than a predetermined limit frequency.

2. A circuit according to claim 1, in which said control signal is a voltage (Vc).

3. A circuit according to claim 1, in which said given increment (ΔVc) is independent of the duration of the corresponding control pulse.

4. A circuit according to claim 1, in which said given increment (ΔVc) is independent of the level of the corresponding control pulse.

5. A circuit according to claim 1, in which said given increment (ΔVc) is a constant increment.

6. A circuit according to claim 2, in which said converter means comprise:
   a capacitor (7) across whose terminals the voltage (Vc) constituting the control signal is taken;
   a transistor (6) switching between an off state and a saturated state so as to control charging of said capacitor;
   transistor control means for controlling said transistor and comprising a diode and capacitor circuit (4, 5) suitable for detecting a transition of a pulse applied to the input and for then causing the transistor to switch from the off state to the saturated state for a predetermined time interval in such a manner as to increase the charge accumulated on the capacitor by a given charge increment during said time interval; and
   a discharge resistor (8) connected across the terminals of the capacitor so as to cause the charge accumulated thereon to decrease from the end of said predetermined time interval until the following pulse appears.

7. A circuit according to claim 4, further including wake-up forcing means (14, 16; 14', 16') suitable for applying a voltage directly to the terminals of the capacitor and its discharge resistor, which voltage is greater than the predetermined threshold value of the threshold means.

8. A circuit according to claim 1, in which the pulse train (Vbf) is the demodulated signal produced at the output of a radio receiver for remote control signals.

EP 0 451 060 B1

FIG. 1

FIG. 2

9